# EUROPÄISCHE PATENTSCHRIFT

(11) **EP 3 011 818 B1**
(45) Veröffentlichungstag und Bekanntmachung des Hinweises auf die Patenterteilung: **26.04.2017**
(21) Anmeldenummer: 15002436.2
(22) Anmeldetag: 17.08.2015
(51) Int. Cl.: A01C 15/00, E01C 19/20

(54) **VERTEILMASCHINE MIT EINEM STREUGUTBEHÄLTER, WELCHER MIT EINEM RÜHRWERK AUSGESTATTET IST**
SPREADER MACHINE WITH A HOPPER EQUIPPED WITH A STIRRER
ÉPANDEUR DOTE D'UNE CUVE A PRODUIT D'EPANDAGE, COMPRENANT UN MELANGEUR

(30) Priorität: 24.10.2014 DE 102014015647
(43) Veröffentlichungstag der Anmeldung: 27.04.2016
(73) Patentinhaber: RAUCH Landmaschinenfabrik GmbH, 76547 Sinzheim (DE)
(72) Erfinder: Stöcklin, Volker, D-77975 Ringsheim (DE); Gushurst, Hans, D-76547 Sinzheim (DE); Mandlier, Maximilian, D-76547 Sinzheim (DE); Huck, Florian, D-77815 Bühl (DE)
(74) Vertreter: Lichti - Patentanwälte Partnerschaft mbB

(56) Entgegenhaltungen:
- EP-A2- 1 990 471
- DE-A1- 2 831 222
- DE-A1- 3 943 444

## Beschreibung

Die Erfindung betrifft eine Verteilmaschine, insbesondere landwirtschaftliche Streumaschine oder Winterdienststreumaschine, mit wenigstens einem Behälter zur Aufnahme von Streugut, wenigstens einer am Boden des Behälters angeordneten Auslauföffnung mit einem dieser nachgeordneten Dosierorgan und einem dem jeweiligen Dosierorgan nachgeordneten Verteilorgan zum Verteilen des Streugutes auf dem Boden, wobei der Behälter mit einem Rührwerk ausgestattet ist, welches eine die Wandung des Behälters durchsetzende, in den Behälter hineinragende Rückwerkswelle umfasst, an deren freien Ende ein Rührkopf festgelegt ist, welcher die Rührwerkswelle gegen die Wandung des Behälters abdichtet und zum Tragen wenigstens eines, als separates Teil ausgestalteten Rührfingers ausgebildet ist.

Verteilmaschinen der vorgenannten Art sind einerseits in Form von landwirtschaftlichen Streumaschinen zum Ausbringen von pulver- und/oder partikelförmigem Gut, wie insbesondere Dünger oder Saatgut, in vielfältiger Ausgestaltung bekannt, so beispielsweise in gezogener oder von einem Dreipunkt einer Zugmaschine, wie eines Traktors, aufgenommener Bauart. Derartige Verteilmaschinen umfassen einen das zu verteilende Streugut aufnehmenden Behälter, welcher sich üblicherweise etwa trichterförmig bzw. konisch nach unten verjüngt und an dessen Boden eine oder zwei Auslauföffnungen angeordnet sind, wobei der jeweiligen Auslauföffnung ein Dosierorgan zugeordnet ist, um das auszubringende Gut in der gewünschten Menge - oder genauer: mit dem gewünschten Massenstrom - dem Behälter zu entnehmen. Das jeweilige Dosierorgan ist mittels eines geeigneten Stellorgans auf- und zusteuerbar, um je nach gewünschter Verteilungsbreite des auszubringenden Streugutes auf dem Boden, je nach Fahrgeschwindigkeit und je nach den physikalischen Eigenschaften des Streugutes, wie beispielsweise dessen Rieselfähigkeit, den gewünschten Massenstrom einstellen zu können. Unterhalb des Dosierorgans befindet sich ein Verteilorgan, wie insbesondere eine mit Wurfschaufeln ausgestattete Verteilerscheibe, mittels welchem das pulver- oder partikelförmige Streugut über die gewünschte Arbeitsbreite verteilt wird. Manche Verteilmaschinen sind überdies mit einer Einrichtung zur Verstellung des Aufgabepunktes des Streugutes auf die Verteilerscheibe ausgestattet, wobei der Aufgabepunkt in Bezug auf die Verteilerscheibe radial (insbesondere zur Vergrößerung/Verkleinerung des Streufächers) und/oder in Umfangsrichtung (insbesondere zum Verdrehen des Streufächers etwa um die Drehachse der Verteilerscheibe) verstellbar sein kann. Eine derartige landwirtschaftliche Verteilmaschine ist beispielsweise aus der DE 10 2007 053 550 A1 bekannt.

Im Falle von Winterdienststreumaschinen dient der Behälter vornehmlich zur Aufnahme von in der Regel granulatförmigem Splitt und/oder Streusalz, wobei die Funktion einer solchen Winterdienststreumaschine weitestgehend der einer oben beschriebenen landwirtschaftlichen Verteil- bzw. Streumaschine entspricht.

Der Behälter von gattungsgemäßen Verteilmaschinen ist häufig mit einem Rührwerk ausgestattet ist, welches üblicherweise nahe der Auslauföffnung des Behälters angeordnet ist und dessen Rührfinger die Auslauföffnung beispielsweise überstreichen können, um eine Verstopfung derselben durch Aggregationen, Verklumpungen oder Anbackungen des in der Regel hygroskopischen Streugutes sowie hierdurch bedingte Abweichungen des gewünschten Massenstromes an Streugutes, welcher mittels der Dosierorgane eingestellt wird, zu verhindern. Derartige Rührwerke umfassen üblicherweise eine die Wandung des Behälters, insbesondere dessen bodenseitige Wandung, durchsetzende, in den Behälter hineinragende Rückwerkswelle, an deren freien Ende ein Rührkopf festgelegt ist, welcher die Rührwerkswelle gegen die Wandung des Behälters abdichtet und zum Tragen eine oder mehrerer Rührfingers ausgebildet ist, welche einstückig mit dem Rührkopf gebildet oder lösbar hieran festgelegt sein können. Eine mit einem derartigen Rührwerk ausgestattete landwirtschaftliche Verteilmaschine ist beispielsweise der DE 10 2005 030 781 A1 zu entnehmen.

Problematisch ist grundsätzlich die Auswahl eines geeigneten Materials für den Rührkopf, welches einer Vielzahl sich in werkstofftechnischer Hinsicht widersprechender Anforderungen genügen muss. So muss das Material des Rührkopfes einerseits eine Festigkeit und Steifigkeit aufweisen, um das notwendige Drehmoment dauerhaft und zuverlässig auf den bzw. die Rührfinger zu übertragen. Darüber hinaus ist eine sehr hohe Verschleißfestigkeit vonnöten, um den auf den Rührkopf einwirkenden abrasiven Kräften der üblicherweise scharfkantigen und abrasiven Streugutpartikel, wie solchen aus Kunstdünger, Splitt oder Streusalz, zu widerstehen. Schließlich ist für das Material des Rührkopfes auch eine hohe Korrosionsbeständigkeit erforderlich, um einer chemischen Korrosion, insbesondere infolge Einwirkung von Kunstdünger oder Streusalz, standzuhalten. Dies um so mehr, als - wie oben bereits angedeutet - das zu verteilende Streugut einen hygroskopischen Charakter besitzt, so dass es insbesondere in Verbindung mit Luftfeuchtigkeit oder gar Regen bzw. Schnee(matsch) ein elektrochemisch höchst aggressives Medium darstellt.

Nachdem eine Fertigung des Rührkopfes aus Edelstahl oder anderen sehr korrosionsbeständigen Metall(legierung)en in wirtschaftlicher Hinsicht wenig Sinn macht - die Materialkosten und insbesondere die Herstellungskosten des üblicherweise mit einer relativ komplexen Geometrie versehenen Rührkopfes verteuern das Rührwerk insgesamt um ein nicht akzeptables Maß - bestehen die Rührköpfe bekannter Rührwerke von gattungsgemäßen Verteilmaschinen üblicherweise aus Metallguss, wodurch dem Rührkopf durch den Arbeitsgang des Gießens in sehr einfacher Weise die gewünschte Form verliehen werden kann und welcher die notwendige Festigkeit und Steifigkeit besitzt, um das Antriebsdrehmoment der Rührwerkswelle auf den oder die Rührfinger zu übertragen. Letzterer ist aufgrund dessen, dass hierauf während des Betriebs die größten mechanischen Kräfte einwirken, was wiederum in einer besonders hohen Verschleißanfälligkeit resultiert, zweckmäßigerweise als separates Teil ausgebildet, um es in einfacher Weise austauschen zu können. Ein mit einem solchen Rührkopf ausgestattetes Rührwerk findet beispielsweise bei gattungsgemäßen Verteilmaschinen in Form von Streumaschinen der Baureihe "MDS" der Anmelderin seit geraumer Zeit Verwendung.

Indes sind derartige Gussmaterialien sehr korrosionsanfällig, was sich nicht nur relativ zeitnah in oberflächigen Absplitterungen der Lackierung und/oder sichtbarer Korrosion manifestiert, sondern insbesondere auch zu einem Festbacken bzw. "Festfressen" des Rührkopfes an der Rührwerkswelle führen kann, so dass der Rührkopf, z.B. anlässlich einer Reinigung oder Wartung des Rührwerk(getriebe)s, nicht mehr von der Rührwerkswelle gelöst werden kann und die Rührwerkswelle durchtrennt werden muss, um ihr abgetrenntes Ende gemeinsam mit dem Rührkopf zu demontieren. Dies ist freilich für den Benutzer sehr aufwändig und unerfreulich sowie mit einem nicht unerheblichen Zeit- und Kostenaufwand verbunden.

Die EP 1 990 471 A2 beschreibt eine Verteilmaschine in Form einer mit Verteilerscheiben ausgestatteten Streumaschine, deren Behälter zur Aufnahme des Streugutes mit einem Rührwerk ausgestattet ist. Das Rührwerk umfasst einen von unten in den Behälter hineinragenden Wellenstumpf, an dessen freiem Ende der Sockel eines Rührkopfes festgelegt ist, welcher aus Stahl, Guss oder verschleißfestem Kunststoff gefertigt sein kann. An dem Sockel ist außenseitig ein Außenkörper aus verschleißarmem und korrosionsbeständigem, gummielastischem Kunststoffmaterial drehfest befestigt, an welchem einstückig die Rührfinger angeformt sind. Darüber hinaus kann ein weiteres, nach oben in den Behälter hineinragendes Rührelement an der freien Stirnseite des Sockels mittels einer entsprechenden Befestigungseinrichtung festgelegt sein. Obgleich sich das bekannte Rührwerk bei gattungsgemäßen Verteilmaschinen bewährt hat, gestaltet sich seine Montage aufgrund der Mehrzahl an Einzelteilen relativ aufwändig, wobei insbesondere im Falle eines Verschleißes der Rührfinger der gesamte Außenkörper ausgetauscht werden muss, was zu einer notwendigen Demontage des gesamten Rührwerks führt.

Der DE 39 43 444 A1 ist eine weitere Verteilmaschine in Form eines Scheibenstreuers zu entnehmen, welche einen mit einem Rührwerk versehenen Behälter aufweist. Das Rührwerk umfasst einen als Kunststoff-Spritzgussteil ausgestalteten Rührkopf mit hieran angespritzten Rührfingern. Als nachteilig erweist sich wiederum die hohe Verschleißanfälligkeit des Rührkopfes und insbesondere dessen gleichfalls aus thermoplastischem Kunststoff bestehenden Rührfingern, wobei nach Abnutzung des Kunststoffmaterials der gesamte Rührkopf demontiert und ausgetauscht werden muss.

Eine weitere Verteilmaschine mit den Merkmalen des Oberbegriffs des Anspruchs 1 ist aus der DE 28 31 222 A1 bekannt. Der Erfindung liegt die Aufgabe zugrunde, das Rührwerk einer Verteilmaschine der eingangs genannten Art auf einfache und kostengünstige Weise dahingehend weiterzubilden, dass dem Rührkopf unter zumindest weitestgehender Vermeidung der vorgenannten Nachteile eine sehr hohe Dauerhaftigkeit verliehen wird.

Erfindungsgemäß wird diese Aufgabe bei einer Verteilmaschine der eingangs genannten Art dadurch gelöst, dass der Rührkopf aus einem ersten Kunststoffmaterial gefertigt ist, wobei der Rührkopf
- an seiner äußeren, dem Behälterinnern zugewandten Seite mit einer Außenbeschichtung aus einem zweiten Kunststoffmaterial mit einer gegenüber dem ersten Kunststoffmaterial des Rührkopfes höheren Abriebfestigkeit und/oder mit einer gegenüber dem ersten Kunststoffmaterial des Rührkopfes geringeren Härte und/oder
- an seiner der Behälterwandung zugewandten Seite, mit welcher er gegen die Behälterwandung anliegt, mit einer Bodenbeschichtung aus einem dritten Kunststoffmaterial mit einer gegenüber dem ersten Kunststoffmaterial des Rührkopfes höheren Abriebfestigkeit und/oder mit einer gegenüber dem ersten Kunststoffmaterial des Rührkopfes geringeren Härte
   versehen ist, wobei der wenigstens eine Rührfinger in einer sich im Wesentlichen in Radialrichtung des Rührkopfes erstreckenden und vollumfänglich geschlossenen Aufnahme festgelegt ist.

Die erfindungsgemäße Ausgestaltung macht es möglich, den Rührkopf gänzlich aus sowohl kostengünstigem als auch einfach formbarem Kunststoff auszugestalten, welcher unempfindlich ist gegen Korrosion, d.h. eine gegenüber elektrochemisch aggressiven Streugutmaterialien, wie Kunst- und Mineraldünger, Streusalz und dergleichen, hohe Korrosionsbeständigkeit aufweist, und welcher folglich zuverlässig zu verhindern vermag, dass der Rührkopf in einer nicht mehr lösbaren Weise an der Rührwerkswelle anbackt. Dabei sorgt das erste Kunststoffmaterial des "eigentlichen" Rührkopfes für die notwendige Festigkeit und Steifigkeit bzw. Zähigkeit des Rührkopfes, um das Antriebsdrehmoment der Rührwerkswelle auf den Rührkopf und von dort auf den bzw. die Rührfinger zu übertragen. Im Hinblick darauf, dass hierfür geeignete - erste - Kunststoffmaterialien üblicherweise auch eine relativ hohe Härte und Sprödigkeit sowie einen relativ hohen Elastizitätsmodul aufweisen, von welchen die Anmelderin gefunden hat, dass sie insbesondere unter reibendem Kontakt mit abrasiven Streugütern, wie Kunstdünger, Streusalz oder Splitt, verhältnismäßig schnell verschleißen und einen Austausch des Rührkopfes erfordern, dient das zweite bzw. dritte Kunststoffmaterial der Außen- bzw. Bodenbeschichtung des Rührkopfes für die erforderliche Abriebfestigkeit desselben, so dass es die erfindungsgemäße Kombination einerseits aus dem ersten, andererseits aus dem zweiten und/oder dritten Kunststoffmaterial möglich macht, den gesamten Rührkopf aus preiswertem und einfach zu verarbeitendem Kunststoff auszugestalten, aber gleichwohl sämtlichen Anforderungen hinsichtlich Festigkeit, Steifigkeit und Zähigkeit, Korrosionsbeständigkeit sowie Abriebfestigkeit Rechnung zu tragen. Dabei wurde überraschenderweise gefunden, dass eine relativ geringe Härte des (zweiten bzw. dritten) Kunststoffmaterials der Beschichtung(en) selbst dann für eine deutlich höhere Verschleiß- und Abriebfestigkeit gegenüber den scharfkantigen und abrasiven Streugutpartikeln sorgt als es bei relativ harten Kunststoffmaterialien der Fall ist, wenn die mittels einschlägiger Werkstoffprüfmethoden, wie beispielsweise der DIN 53516, ermittelte Abriebfestigkeit des Beschichtungsmaterials im Wesentlichen jener des ersten Kunststoffmaterials des Rührkopfes selbst weitgehend entspricht.

Während die einteilige Ausgestaltung des Rührkopfes darüber hinaus für eine relativ einfache und schnelle Montier- bzw. Demontierbarkeit sorgt, ist durch die Ausbildung des bzw. der Rührfinger(s) als separate(s) Teil(e) insbesondere ein einfacher Austausch möglich, ohne den gesamten Rührkopf auswechseln zu müssen. Aufgrund dessen Befestigung in der sich etwa in Radialrichtung des Rührkopfes erstreckenden und allseitig geschlossenen Aufnahme des Rührkopfes ist sichergestellt, dass nicht nur während des Normalbetriebs, sondern auch beim Betriebsstart des Rührwerks - insbesondere auch dann, wenn das Streugut beispielsweise nach längerer Verweildauer in dem Behälter verbacken und "ausgehärtet" ist - eine zuverlässige Drehmomentenübertragung von dem Rührkopf auf den bzw. die Rührfinger sichergestellt ist, weil die längs der Erstreckungsrichtung des Rührfingers angeordneten Seitenwände der Aufnahme sowohl nach oben als auch nach unten abgestützt sind und es hierdurch bei den erfindungsgemäß eingesetzten Kunststoffmaterialien nicht zu Rissbildungen oder gar zum Bruch kommt. Ferner lässt sich der wenigstens eine Rührfinger nicht nur bedarfsweise austauschen - sei es infolge Verschleißes oder sei es aufgrund eines beabsichtigten Austausches gegen einen anderen, für das jeweilige Streugut besser geeigneten Rührfingers - sondern lässt sich der Rührfinger insbesondere auch aus einem sehr leistungsfähigen, gegenüber den für den Rührkopf verwendeten Kunststoffmaterialien festeren, steiferen und zäheren Material, wie beispielsweise aus Metall einschließlich Metalllegierungen, ausbilden. In diesem Zusammenhang sei darauf hingewiesen, dass auf den umlaufenden Rührfinger mit zunehmender Länge desselben erhebliche Kräfte, wie insbesondere Biegemomente, wirken, welche mit steigendem Füllniveau des Behälters und dadurch bedingter Gravitation des auf dem rotierenden Rührfinger lastenden Streugutes zunehmen. Entsprechende Kräfte wirken auf die zur Befestigung des Rührfingers dienende Aufnahme des Rührkopfes, weshalb sich die Aufnahme erfindungsgemäß um den gesamten Umfang eines zum Einschieben in die Aufnahme vorgesehenen Längenabschnittes des Rührfingers erstreckt.

Sofern der Rührkopf sowohl mit einer Außen- als auch mit einer Bodenbeschichtung versehen ist, können das zweite Kunststoffmaterial der Außenbeschichtung und das dritte Kunststoffmaterial der Bodenbeschichtung des Rührkopfes im Hinblick auf eine einfache Herstellung vorzugsweise, wenn auch nicht notwendigerweise, identisch sein. In diesem Fall kann es ferner von Vorteil sein, wenn die Bodenbeschichtung des Rührkopfes nahtlos in seine Außenbeschichtung übergeht, d.h. der Rührkopf weist zumindest zwischen seinem Boden - oder genauer: zwischen seinen Bodenbereichen, mit welchen er nach Art einer Gleitdichtung gegen die Wandung des Behälters abdichtet - und seinen mantelseitigen Außenflächen eine durchgängige Beschichtung aus dem zweiten Kunststoffmaterial auf, welches zugleich das dritte Kunststoffmaterial darstellt.

Gemäß einer in werkstofftechnischer Hinsicht vorteilhaften Ausgestaltung kann ferner vorgesehen sein, dass das erste Kunststoffmaterial des Rührkopfes
- eine höhere Zugfestigkeit und/oder
- eine höhere Bruchfestigkeit und/oder
- eine höhere Reißfestigkeit und/oder
- einen höheren Elastizitätsmodul
   aufweist als das zweite Kunststoffmaterial der Außenbeschichtung und/oder als das dritte Kunststoffmaterial der Bodenbeschichtung. Auf diese Weise lassen sich dem Rührkopf selbst durch das erste Kunststoffmaterial eine sehr hohe Festigkeit, Steifigkeit und Zähigkeit und folglich insgesamt eine hohe Stabilität und Dauerhaftigkeit verleihen, während das zweite und/oder dritte Kunststoffmaterial der Beschichtung(en) eine einwandfreie Verschleißfestigkeit gegenüber den auf dieses einwirkenden, oft harten und scharfkantigen Streugutpartikeln infolge seiner hohen Abriebfestigkeit und/oder seiner geringen Härte sicherstellt.

Im Hinblick auf die genannten vorteilhaften Werkstoffeigenschaften des ersten Kunststoffmaterial des Rührkopfes kann in vorteilhafter Ausgestaltung vorgesehen sein, dass das erste Kunststoffmaterial des Rührkopfes
- eine Härte von wenigstens etwa 40 Shore-D (entsprechend etwa 95 Shore-A), insbesondere von wenigstens etwa 50 Shore-D (> 100 Shore-A), vorzugsweise von wenigstens etwa 60 Shore-D (>> 100 Shore-A), ermittelt gemäß DIN 53505; und/oder
- eine Zugfestigkeit von wenigstens etwa 10 N/mm², insbesondere von wenigstens etwa 15 N/mm², vorzugsweise von wenigstens etwa 20 N/mm², bei 50% Dehnung, (oder auch im Wesentlichen entsprechende Werte bei einer 100% Dehnung); ermittelt gemäß DIN 53504; und/oder
- eine Bruchfestigkeit von wenigstens etwa 50 N/mm², insbesondere von wenigstens etwa 60 N/mm², vorzugsweise von wenigstens etwa 70 N/mm², ermittelt gemäß DIN 53504; und/oder
- eine Reißfestigkeit von wenigstens etwa 100 N/mm, insbesondere von wenigstens etwa 150 N/mm, vorzugsweise von wenigstens etwa 200 N/mm, ermittelt gemäß DIN 53515,
aufweist.

Für das zweite Material der Außenbeschichtung und/oder für das dritte Material der Bodenbeschichtung hat es sich hingegen in werkstofftechnischer Hinsicht als vorteilhaft erwiesen, wenn es
- einen Abriebverlust von höchstens etwa 50 mm³, insbesondere von höchstens etwa 45 mm³, vorzugsweise von höchstens etwa 40 mm³, beispielsweise von höchstens etwa 35 mm³, ermittelt gemäß DIN 53516; und/oder
- eine Härte von höchstens etwa 100 Shore-A (entsprechend etwa 45 Shore-D), insbesondere von höchstens etwa 95 Shore-A (entsprechend etwa 40 Shore-D), vorzugsweise von höchstens etwa 90 Shore-A (entsprechend etwa 35 Shore-D), beispielsweise von höchstens etwa 85 Shore-A (entsprechend etwa 30 Shore-D), ermittelt gemäß DIN 53505, aufweist.

In weiterhin vorteilhafter Ausgestaltung kann vorgesehen sein, dass zumindest das erste Kunststoffmaterial des Rührkopfes, insbesondere sowohl das erste Kunststoffmaterial als auch das zweite Kunststoffmaterial der Außenbeschichtung und/oder das dritte Kunststoffmaterial der Bodenbeschichtung, von einem thermoplastischen Kunststoffmaterial gebildet ist bzw. sind. Auf diese Weise lässt sich der Rührkopf auf einfache Weise durch thermoplastische Verarbeitungsverfahren, wie beispielsweise Spritzgießen, herstellen und besitzt eine gute Rezyklierbarkeit und ist folglich umweltfreundlich.

Dementsprechend kann der Rührkopf vorzugsweise von einem Spritzgussteil, insbesondere von einem Mehrkomponenten-Spritzgussteil, gebildet sein, wobei im letztgenannten Fall die erste Komponente das erste (plastifizierbare) Kunststoffmaterial des Rührkopfes darstellt, während die zweite und gegebenenfalls dritte Komponente von dem zweiten bzw. dritten (gleichfalls plastifizierbaren) Kunststoffmaterial der Außen- bzw. Bodenbeschichtung gebildet sind, sofern es sich hierbei nicht um dasselbe Kunststoffmaterial handelt, so dass es sich bei dem Rührkopf um ein Zweikomponenten-Spritzgussteil handelt. Es sei an dieser Stelle allerdings darauf hingewiesen, dass sämtliche für den erfindungsgemäßen Rührkopf verwendete Kunststoffmaterialien auch duroplastischen Charakter besitzen können, was gleichfalls eine einfache Herstellung, z.B. mittels Gießen, gewährleistet.

Zumindest das erste Kunststoffmaterial des Rührkopfes, insbesondere sowohl das erste Kunststoffmaterial als auch das zweite Kunststoffmaterial der Außenbeschichtung und/oder das dritte Kunststoffmaterial der Bodenbeschichtung, kann bzw. können dabei beispielsweise von Polyurethanen, insbesondere auf der Basis von Polyestern, gebildet sein, wobei aus den oben genannten Gründen thermoplastischen Polyurethanen (TPU) in vielen Fällen der Vorzug zu geben ist.

Wie bereits erwähnt, kann aus den oben angegebenen Gründen vorteilhafterweise vorgesehen sein, dass der wenigstens eine Rührfinger aus Metall gefertigt ist, wie beispielsweise aus Stahl bzw. Edelstahl oder dergleichen. Je nach den für den bzw. die Rührfinger verwendeten Metallwerkstoffen kann der Rührfinger, sofern gewünscht, selbstverständlich seinerseits mit einer korrosionshemmenden Beschichtung versehen sein, wie insbesondere einer Kunststoffbeschichtung, für welche beispielsweise entsprechende Kunststoffmaterialien Verwendung finden können wie für die Außen- und/oder Innenbeschichtung des Rührkopfes selbst.

Der Innenquerschnitt der allseitig geschlossenen Aufnahme des Rührkopfes ist vorzugsweise im Wesentlichen komplementär zu dem Außenquerschnitt des Rührfingers ausgestaltet, um für eine bestmögliche Drehmomentenübertragung auf den Rührfinger bei minimierter Verschleißanfälligkeit zu sorgen.

Zur lösbaren Befestigung des bzw. der Rührfinger(s) an dem Rührkopf kann hinsichtlich einer sowohl sehr robusten als auch konstruktiv einfachen und leicht handhabbaren Ausgestaltung vorgesehen sein, dass der wenigstens eine Rührfinger mittels wenigstens einer, z.B. genau einer, sich im Wesentlichen senkrecht zu der Aufnahme des Rührkopfes erstreckenden Schraube fixiert ist, wobei die Schraube im montierten Zustand des Rührfingers insbesondere eine Durchgangsbohrung desselben durchsetzt, so dass der Rührfinger gegen eine Verschiebung in Axialrichtung des Rührfingers bzw. in Radialrichtung des Rührkopfes während des Betriebs sicher bewahrt ist.

Eine solche (oder gegebenenfalls auch mehrere solcher) Schraube(n) kann (können) insbesondere zwischen der dem Behälterinnern zugewandten, freien Stirnseite des Rührkopfes und einer Schulter einer sich in Axialrichtung erstreckenden Innenbohrung des Rührkopfes, welche die Rührwerkswelle aufnimmt, wirksam sein, so dass sich die zur lösbaren Befestigung des Rührfingers an dem Rührkopf dienende Schraube bzw. deren Mutter einerseits an der freien Stirnseite des Rührkopfes, andererseits an der in Form einer Querschnittsverminderung der Innenbohrung des Rührkopfes gebildeten Schulter abstützen und dabei insbesondere infolge einer gewissen Elastizität des Kunststoffmaterials des Rührkopfes den Rührfinger in der Aufnahme zu verklemmen vermögen.

Die dem Behälterinnern zugewandte, freie Stirnseite des Rührkopfes kann hierbei zumindest in ihrem zentralen Bereich mit einer Platte, insbesondere aus Metall, abgedeckt sein, so dass die Platte zur Verteilung des durch die Befestigungsschraube(n) bewirkten Andruckes über eine relativ große Fläche dienen kann. Die Platte kann dabei vorzugsweise in einer oberflächigen Vertiefung des Rührkopfes aufgenommen sein, welche mit ihrer Innenumfangsform an den hierzu etwa komplementären Außenumfang der Platte angepasst sein kann.

In weiterhin vorteilhafter Ausgestaltung kann hinsichtlich einer einfachen Montage bzw. Demontage des Rührkopfes an die bzw. von der Rührwerkswelle vorgesehen sein, dass der Rührkopf, insbesondere mittels eines Bajonettverschlusses, lösbar an der Rührwerkswelle festgelegt ist, welcher z.B. zwischen dem Außenumfang der Rührwerkswelle und einer sich in Axialrichtung, also koaxial zur Rührwerkswelle, erstreckenden Innenbohrung des Rührkopfes (welche vorzugsweise zugleich die Schulter zur Abstützung der zur Befestigung des Rührfingers dienenden Schulter aufweist) wirksam ist. Indes sind grundsätzlich auch andere bekannte, einfach verbindbare sowie lösbare Verbindungsarten zwischen der Rührwerkswelle und dem Rührkopf denkbar, wie beispielsweise Rast-, Schraubverbindungen oder dergleichen.

Bei der Rührwerkswelle kann es sich im Übrigen um die Welle eines separaten, in dem Behälter der Verteilmaschine angeordneten Rührwerks oder auch um den endständigen Abschnitt einer die in Form von Verteilerscheiben ausgebildeten Verteilorgane der Verteilmaschine tragenden Welle handeln, wie es als solches aus der eingangs zitierten DE 10 2005 030 781 A1 bekannt ist.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Draufsicht auf einen mit einem Rührwerk ausgestatteten Behälter einer landwirtschaftlichen Verteilmaschine von oben;
- Fig. 2: eine schematische Schnittansicht der Verteilmaschine gemäß Fig. 1 entlang der Schnittebene A-A;
- Fig. 3: eine schematische Detailansicht des Ausschnittes Z gemäß Fig. 2;
- Fig. 4: eine schematische Seitenansicht einer Ausführungsform eines mit einem Rührfinger bestückten Rührkopfes des Rührwerks der Verteilmaschine gemäß Fig. 1 bis 3;
- Fig. 5: eine schematische Draufsicht auf den Rührkopf gemäß Fig. 4 von oben; und
- Fig. 6: eine schematische Schnittansicht des Rührkopfes gemäß Fig. 4 und 5 entlang der Schnittebene A-A gemäß Fig. 5.

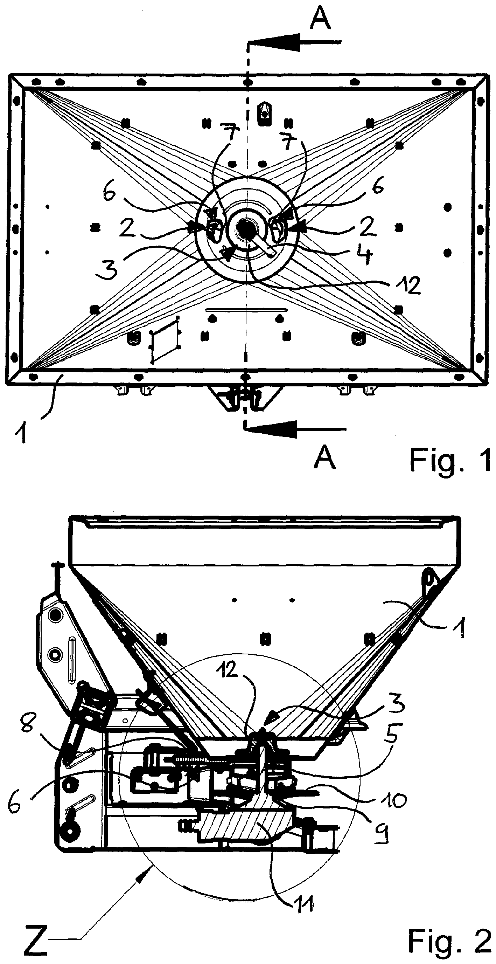

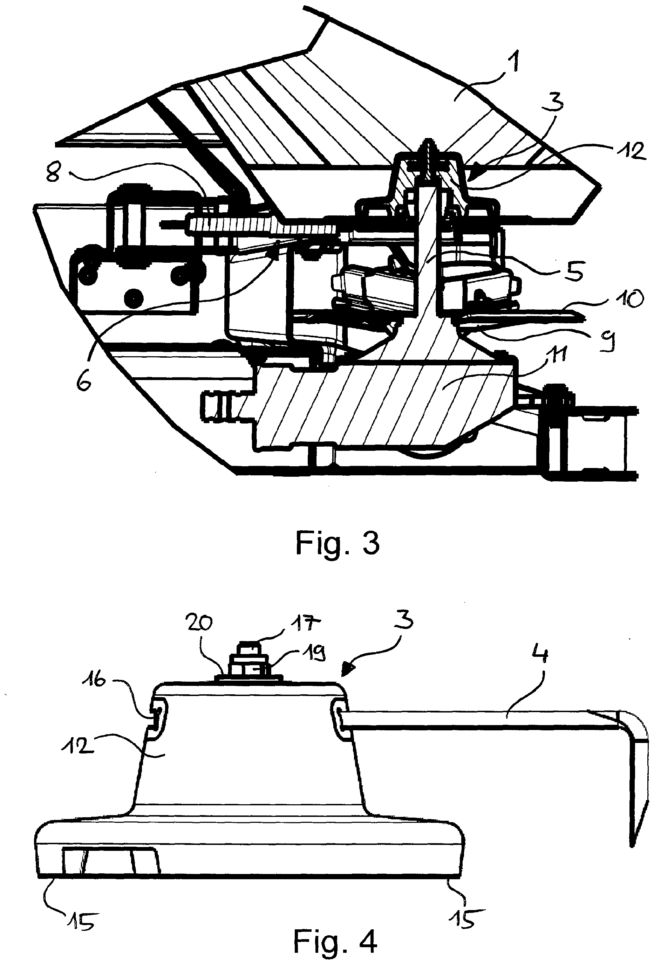

In Fig. 1 bis 3 ist ein Ausführungsbeispiel einer erfindungsgemäßen Verteilmaschine in Form einer landwirtschaftlichen Streumaschine anhand eines Anbau-Düngerstreuers wiedergegeben, welcher im vorliegenden Fall als Scheibenstreuer ausgebildet ist. Wie insbesondere aus Fig. 1 und 2 ersichtlich, weist die Verteilmaschine einen Behälter 1 auf, welcher als Vorratsbehälter für das auszubringende Streugut dient. Am Boden des sich im Wesentlichen trichterförmig nach unten verjüngenden Behälters 1 befinden sich eine - oder hier: zwei - Auslauföffnungen 2, in deren Nähe - hier: zwischen denselben - ein Rührwerk 3 (siehe insbesondere Fig. 3) angeordnet ist, dessen Rührfinger 4 die beiden Auslauföffnungen 2 während des Betriebs überstreicht. Eine Rührwerkswelle 5 des Rührwerks 3 ragt von unten in den Behälter 1 hinein und durchsetzt die bodenseitige Wandung des Behälters 1 in dessen zentralem, unterem Abschnitt nahe der Auslauföffnung 2 (Fig. 2 und 3). Den Auslauföffnungen 2 ist ferner ein Dosierorgan 6 zugeordnet, welches im vorliegenden Fall Dosierschieber 7 umfasst, welche die Auslauföffnungen 2 entsprechend dem gewünschten Massenstrom an Streugut teilweise oder auch gänzlich verschließen. Der oder die Dosierschieber 7 ist bzw. sind beispielsweise mittels eines Aktuators 8, z.B. in Form einer elektrisch betriebenen Kolben-/Zylindereinheit, betätigbar. Koaxial zu der vertikalen Drehachse der Rührwerkswelle 5 des Rührwerks 3 ist ein Verteilorgan in Form einer gesteuert rotationsangetriebenen Verteilerscheibe 9 mit Wurfschaufeln 10 drehbar gelagert, um das aus dem Behälter 1 über das Dosierorgan 6 auf die Verteilerscheibe 9 auftreffende Streugut radial fort zu schleudern und auf dem Boden zu verteilen. Die Rührwerkswelle 5 trägt folglich zugleich die mit den Wurfschaufeln 10 versehene Verteilerscheibe 9 und treibt sowohl das Rührwerk 3 als auch die Verteilerscheibe 9 an, wobei sie in dem in Fig. 2 und 3 strichlinierten Bereich 11 z.B. über ein Winkelgetriebe mit einer etwa horizontalen Antriebswelle in Verbindung steht. Letztere ist an ihrem entgegengesetzten Ende mit einem Antrieb verbunden, wie einem hydraulischen oder elektrischen Antrieb, oder mit einer Kopplungseinrichtung, um an die Zapfwelle einer Zugmaschine bzw. eines Traktors angeschlossen zu werden. Darüber hinaus kann die Verteilmaschine z.B. auch eine als solche bekannte Einrichtung zur Verstellung des Aufgabepunktes des Streugutes auf die Verteilerscheibe 9 aufweisen (nicht gezeigt).

Es sei an dieser Stelle darauf hingewiesen, dass es sich bei der Verteilmaschine selbstverständlich auch um einen Zweischeibenstreuer, wie er als solcher beispielsweise aus der DE 10 2005 030 781 A1 bekannt ist, oder auch um eine Winterdienststreumaschine mit einem oder zwei Verteilorganen handeln kann (nicht zeichnerisch dargestellt).

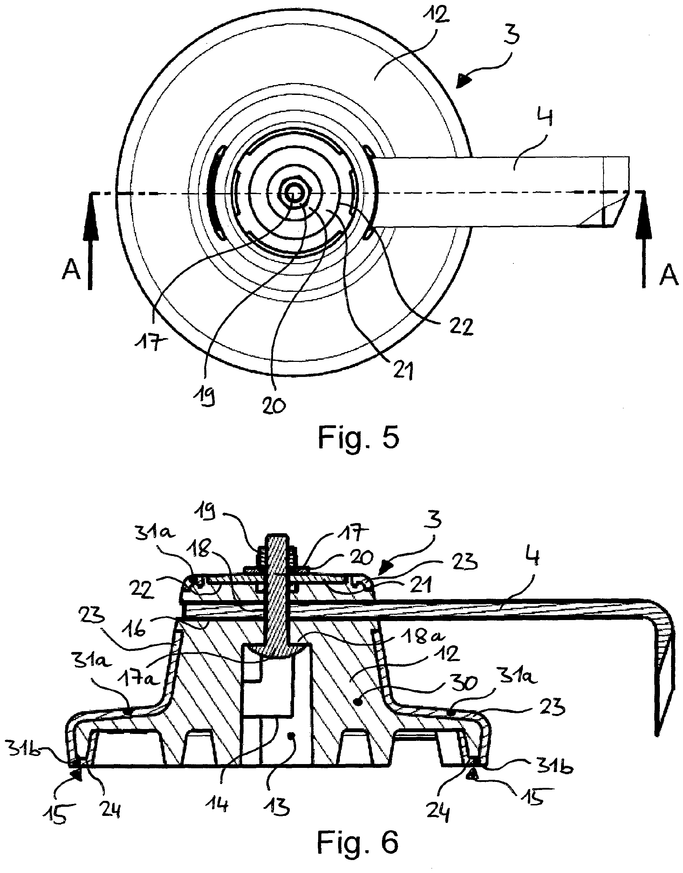

Wie insbesondere der Fig. 3 in Verbindung mit den Fig. 4 bis 6 zu entnehmen ist, umfasst das Rührwerk 3 neben dem Rührfinger 4 insbesondere einen Rührkopf 12, welcher an dem freien Ende der die bodenseitige Wandung des Behälters 1 durchsetzenden Rührwerkswelle 5, beispielsweise mittels eines zwischen dem Außenumfang der Rührwerkswelle 3 und einer sich in Axialrichtung erstreckenden Innenbohrung 13 des Rührkopfes 12 (vgl. Fig. 6) wirksamen Bajonettverschlusses 14 oder dergleichen, lösbar drehfest befestigt ist. Der Rührkopf 12 dient dabei einerseits als Träger des Rührfingers 4, andererseits zur Abdichtung der Rührwerkswelle 3 gegen die bodenseitige Wandung des Behälters 1 über einen bodenseitigen Abdichtungsbereich 15 des Rührkopfes 12 (vgl. Fig. 4 und 6).

Während der Rührkopf 12, wie weiter unten noch im Einzelnen erläutert, aus Kunststoff gefertigt ist, ist der als separates Bauteil ausgestaltete Rührfinger 4 beim vorliegenden Ausführungsbeispiel z.B. aus korrosionsbeständigem Metall, wie Stahl, Edelstahl oder dergleichen, gefertigt, um die während des Betriebs auf ihn einwirkenden Biegemomente einwandfrei aufnehmen zu können und für eine hohe Verschleißfestigkeit zu sorgen. Der Rührfinger 4 ist dabei in einer sich etwa in Radialrichtung des Rührkopfes 12 (also etwa senkrecht zu der Rührwerkswelle 5) erstreckenden Aufnahme 16 des Rührkopfes 12 festgelegt, wobei die Aufnahme 16 vollumfänglich geschlossen ausgestaltet ist und den Rührkopf 12 radial durchsetzt, so dass die durch den rotierenden Rührfinger 4 bewirkten Biegemomente praktisch über den gesamten Durchmesser des Rührkopfes 12 aufgenommen werden können. Der Innenquerschnitt der Aufnahme 16 ist dabei zweckmäßigerweise im Wesentlichen komplementär zu dem Außenquerschnitt des Rührfingers 4 ausgestaltet. Wie insbesondere aus der Fig. 6 hervorgeht, dient zur Fixierung des Rührfingers 4 in der Aufnahme 16 des Rührkopfes 12 bei dem zeichnerisch wiedergegebenen Ausführungsbeispiel eine sich etwa senkrecht zu der Aufnahme 16 und koaxial zu der Rührwerkswelle 3 erstreckende Schraube 17, welche eine Durchgangsbohrung 18 des Rührfingers 4 durchsetzt und deren Kopf 17a sich an einer in Form einer Querschnittsverengung der zur Aufnahme der Rührwerkswelle 3 dienenden Innenbohrung 13 gebildeten Schulter 18a abstützt, während sich eine von außen auf das freie Ende der Schraube 17 aufgebrachte Mutter 19, gegebenenfalls unter Zwischenanordnung einer Unterlegscheibe 20, auf der freien, in den Zeichnungen oberen Stirnseite des Rührkopfes 12 abstützt. Diese freie (obere) Stirnseite des Rührkopfes 12 kann ferner zumindest in ihrem zentralen Bereich mit einer Platte 21, z.B. aus korrosionsfestem Metall, wie Stahl, Edelstahl etc., abgedeckt sein, um die durch den Andruck der Schrauben-/Muttereinheit 17, 19 bewirkte Kraft großflächig in den Rührkopf 12 einzuleiten. Die Platte 21 ist dabei z.B. in einer oberflächigen Vertiefung 22 des Rührkopfes 12 angeordnet, deren Innenquerschnitt wiederum zweckmäßigerweise etwa komplementär zum Außenquerschnitt der Platte 21 ausgestaltet ist.

Wie bereits angedeutet, ist der Rührkopf 12 selbst aus einem ersten, gegenüber den elektrochemisch aggressiven Streugutmaterialien, wie Kunst- und Mineraldünger, Streusalz, Splitt und dergleichen, korrosionsfesten Kunststoffmaterial 30 gebildet, welches eine hohe mechanische Festigkeit, Steifigkeit und Zähigkeit aufweist, um dem Rührkopf 12 die erforderliche Stabilität und Dauerhaftigkeit zu verleihen, so dass die auf ihn während des Betriebs einwirkenden Drehmomente einwandfrei aufgenommen werden. An seiner äußeren, dem Behälterinnern zugewandten Seite ist der Rührkopf 12 mit einer Außenbeschichtung 23 aus einem mit dem ersten Kunststoffmaterial 30 gut verträglichen zweiten Kunststoffmaterial 31a versehen, welches gleichfalls eine gegenüber den genannten Streugutmaterialien hohe Korrosionsfestigkeit aufweist und eine gegenüber dem ersten Kunststoffmaterial 30 höhere Abriebfestigkeit und/oder geringere Härte besitzt, wodurch es dem Rührkopf 12 eine hohe Verschleißfestigkeit gegenüber den abrasiven und scharfkantigen Streugutpartikeln verleiht. Die Außenbeschichtung 23 aus dem zweiten Kunststoffmaterial 31a bedeckt die Außen- bzw. Mantelseiten des Rührkopfes 12 vorzugsweise im Wesentlichen vollständig und erstreckt sich zweckmäßigerweise auch über seine Stirnseite, sofern diese nicht mit einer das erste Kunststoffmaterial 30 ohnehin vor Verschleiß bewahrenden Platte 21 abgedeckt ist. Darüber hinaus ist der Rührkopf 12 an seiner in den Zeichnungen unteren, der bodenseitigen Behälterwandung zugewandten Seite zumindest an denjenigen Bereichen 15, wo er die Rührwerkswelle 3 nach Art einer Gleitdichtung gegen den Behälter 1 abdichtet, mit einer Bodenbeschichtung 24 aus einem dritten Kunststoffmaterial 31b ausgestattet, wobei es sich im vorliegenden Fall bei dem dritten Kunststoffmaterial 31b der Bodenbeschichtung 24 um dasselbe Material handelt wie bei dem zweiten Kunststoffmaterial 31a der Außenbeschichtung 23 und letztere nahtlos bzw. einteilig in die Bodenbeschichtung 24 übergeht.

Sowohl bei dem ersten Kunststoffmaterial 30 des Rührkopfes 12 selbst als auch bei dem zweiten (bzw. dem diesen identischen, dritten) Kunststoffmaterial 31a, 31b der Außen- 23 und Bodenbeschichtung handelt es sich vorzugsweise um thermoplastische Polymermaterialien, so dass der Rührkopf 12 einschließlich seiner Beschichtungen 31a, 31b insgesamt als Spritzgussteil ausgestaltet sein kann, welches durch Zweikomponenten-Spritzgießen erzeugt worden ist. Ale geeignet haben sich hierbei z.B., wenn auch nicht ausschließlich, thermoplastische Polyurethane (TPU) auf der Basis von Polyestern erwiesen.

Nachstehend sind exemplarische Ausführungsbeispiele einerseits eines ersten Kunststoffmaterials 30 für den Rührkopf 12 selbst, andererseits zweier zweiter 31a bzw. dritter Kunststoffmaterialien 31b für die Außen- 23 und Bodenbeschichtung 24 angegeben:

### 1. Kunststoffmaterial (30), Rührkopf:

Thermoplastisches Polyurethan (TPU) auf der Basis von Polyestern, Handelsname "LARIPUR™ LPR 72D25" der *COIM S.p.A.* (IT).

| | |
|---|---|
| Härte: | 67 Shore-D (entsprechend >> 100 Shore-A) |
| | (ermittelt gemäß DIN 53505); |
| Zugfestigkeit: | 26,5 N/mm² bei 50% Dehnung, |
| | 28,2 N/mm² bei 100% Dehnung, |
| | 50,5 N/mm² bei 300% Dehnung |
| | (ermittelt gemäß DIN 53504); |
| Bruchfestigkeit: | 71,2 N/mm² (ermittelt gemäß DIN 53504); |
| Reißfestigkeit: | 220 N/mm (ermittelt gemäß DIN 53515); |
| Abriebverlust: | 40 mm³ (ermittelt gemäß DIN 53518). |

### 2./3. Kunststoffmaterial (31a, 31b), Beschichtung:

### (a) Beschichtungsmaterial 1:

Thermoplastisches Polyurethan (TPU) auf der Basis von Polyestern, Handelsname "LARIPUR™ LPR 9025EG" der *COIM S.p.A.* (IT).

| | |
|---|---|
| Härte: | 90 Shore-A (entsprechend etwa 35 Shore-D) |
| | (ermittelt gemäß DIN 53505); |
| Zugfestigkeit: | 6,4 N/mm² bei 50% Dehnung, |
| | 7,8 N/mm² bei 100% Dehnung, |
| | 18,6 N/mm² bei 300% Dehnung |
| | (ermittelt gemäß DIN 53504); |
| Bruchfestigkeit: | 55,2 N/mm² (ermittelt gemäß DIN 53504); |
| Reißfestigkeit: | 101 N/mm (ermittelt gemäß DIN 53515); |
| Abriebverlust: | 30 mm³ (ermittelt gemäß DIN 53518). |

### (b) Beschichtungsmaterial 2:

Thermoplastisches Polyurethan (TPU) auf der Basis von Polyestern, Handelsname "LARIPUR™ LPR 7015" der *COIM S.p.A.* (IT).

| | |
|---|---|
| Härte: | 70 Shore-A (entsprechend etwa 18 Shore-D) |
| | (ermittelt gemäß DIN 53505); |
| Zugfestigkeit: | 2,5 N/mm² bei 50% Dehnung, |
| | 4,0 N/mm² bei 100% Dehnung, |
| | 9,8 N/mm² bei 300% Dehnung |
| | (ermittelt gemäß DIN 53504); |
| Bruchfestigkeit: | 40,2 N/mm² (ermittelt gemäß DIN 53504); |
| Reißfestigkeit: | 47 N/mm (ermittelt gemäß DIN 53515); |
| Abriebverlust: | 40 mm³ (ermittelt gemäß DIN 53518). |

Während das oben als "Beschichtungsmaterial 1" bezeichnete Kunststoffmaterial (31a, 31b) sowohl einen gegenüber dem ersten Kunststoffmaterial (30) des Rührkopfes (12) höheren Abriebverlust als auch eine demgegenüber geringere Härte aufweist, entspricht der Abriebverlust des oben als "Beschichtungsmaterial 2" bezeichnete Kunststoffmaterials (31a, 31b) weitestgehend jenem des ersten Kunststoffmaterials (30) des Rührkopfes (12), doch verleiht auch dieses "Beschichtungsmaterial 2" dem Rührkopf (12) aufgrund seiner deutlich geringeren Härte im Vergleich mit dem ersten Kunststoffmaterial (30) eine sehr hohe Verschleißfestigkeit gegenüber dem abrasiven Angriff der während des Betriebs hiermit in Gleitkontakt stehenden, harten und scharfkantigen Streugutpartikel.

## Patentansprüche

1. Verteilmaschine, insbesondere landwirtschaftliche Streumaschine oder Winterdienststreumaschine, mit wenigstens einem Behälter (1) zur Aufnahme von Streugut, wenigstens einer am Boden des Behälters (1) angeordneten Auslauföffnung (2) mit einem dieser nachgeordneten Dosierorgan (6) und einem dem jeweiligen Dosierorgan (6) nachgeordneten Verteilorgan zum Verteilen des Streugutes auf dem Boden, wobei der Behälter (1) mit einem Rührwerk (3) ausgestattet ist, welches eine die Wandung des Behälters (1) durchsetzende, in den Behälter (1) hineinragende Rückwerkswelle (5) umfasst, an deren freien Ende ein Rührkopf (12) festgelegt ist, welcher die Rührwerkswelle (5) gegen die Wandung des Behälters (1) abdichtet und zum Tragen wenigstens eines, als separates Teil ausgestalteten Rührfingers (4) ausgebildet ist, wobei der Rührkopf (12) aus einem ersten Kunststoffmaterial (30) gefertigt ist, wobei der Rührkopf (12)
- an seiner äußeren, dem Behälterinnern zugewandten Seite mit einer Außenbeschichtung (23) aus einem zweiten Kunststoffmaterial (31a) mit einer gegenüber dem ersten Kunststoffmaterial (30) des Rührkopfes (12) höheren Abriebfestigkeit und/oder mit einer gegenüber dem ersten Kunststoffmaterial (30) des Rührkopfes (12) geringeren Härte und/oder
- an seiner der Behälterwandung zugewandten Seite, mit welcher er gegen die Behälterwandung anliegt, mit einer Bodenbeschichtung (24) aus einem dritten Kunststoffmaterial (31b) mit einer gegenüber dem ersten Kunststoffmaterial (30) des Rührkopfes (12) höheren Abriebfestigkeit und/oder mit einer gegenüber dem ersten Kunststoffmaterial (30) des Rührkopfes (12) geringeren Härte versehen ist, **dadurch gekennzeichnet, dass** der wenigstens eine Rührfinger (4) in einer sich im Wesentlichen in Radialrichtung des Rührkopfes (12) erstreckenden und vollumfänglich geschlossenen Aufnahme (16) festgelegt ist.

2. Verteilmaschine nach Anspruch 1, **dadurch gekennzeichnet, dass** das zweite Kunststoffmaterial (31a) der Außenbeschichtung (23) und das dritte Kunststoffmaterial (31b) der Bodenbeschichtung (24) des Rührkopfes (12) identisch sind, wobei insbesondere die Bodenbeschichtung (24) des Rührkopfes (12) nahtlos in seine Außenbeschichtung (23) übergeht.

3. Verteilmaschine nach Anspruch 1 oder 2, **dadurch gekennzeichnet, dass** das erste Kunststoffmaterial (30) des Rührkopfes (12)
- eine höhere Zugfestigkeit und/oder
- eine höhere Bruchfestigkeit und/oder
- eine höhere Reißfestigkeit und/oder
- einen höheren Elastizitätsmodul
aufweist als das zweite Kunststoffmaterial (31a) der Außenbeschichtung (23) und/oder als das dritte Kunststoffmaterial (31b) der Bodenbeschichtung (24).

4. Verteilmaschine nach einem der Ansprüche 1 bis 3, **dadurch gekennzeichnet, dass** das erste Kunststoffmaterial (30) des Rührkopfes (12)
- eine Härte von wenigstens 40 Shore-D, insbesondere von wenigstens 50 Shore-D, vorzugsweise von wenigstens 60 Shore-D, ermittelt gemäß DIN 53505; und/oder
- eine Zugfestigkeit von wenigstens 10 N/mm², insbesondere von wenigstens 15 N/mm², vorzugsweise von wenigstens 20 N/mm², bei 50% Dehnung, ermittelt gemäß DIN 53504; und/oder
- eine Bruchfestigkeit von wenigstens 50 N/mm², insbesondere von wenigstens 60 N/mm², vorzugsweise von wenigstens 70 N/mm², ermittelt gemäß DIN 53504; und/oder
- eine Reißfestigkeit von wenigstens 100 N/mm, insbesondere von wenigstens 150 N/mm, vorzugsweise von wenigstens 200 N/mm, ermittelt gemäß DIN 53515, aufweist.

5. Verteilmaschine nach einem der Ansprüche 1 bis 4, **dadurch gekennzeichnet, dass** das zweite Material (31a) der Außenbeschichtung (23) und/oder das dritte Material (31b) der Bodenbeschichtung (24)
- einen Abriebverlust von höchstens 50 mm³, insbesondere von höchstens 45 mm³, vorzugsweise von höchstens 40 mm³, ermittelt gemäß DIN 53516; und/oder
- eine Härte von höchstens 100 Shore-A, insbesondere von höchstens 95 Shore-A, vorzugsweise von höchstens 90 Shore-A, ermittelt gemäß DIN 53505,
aufweist.

6. Verteilmaschine nach einem der Ansprüche 1 bis 5, **dadurch gekennzeichnet, dass** zumindest das erste Kunststoffmaterial (30) des Rührkopfes (12), insbesondere sowohl das erste Kunststoffmaterial (30) als auch das zweite Kunststoffmaterial (31a) der Außenbeschichtung (23) und/oder das dritte Kunststoffmaterial (31b) der Bodenbeschichtung (24), von einem thermoplastischen Kunststoffmaterial gebildet ist/sind.

7. Verteilmaschine nach Anspruch 6, **dadurch gekennzeichnet, dass** der Rührkopf (12) von einem Spritzgussteil, insbesondere von einem Mehrkomponenten-Spritzgussteil, gebildet ist.

8. Verteilmaschine nach einem der Ansprüche 1 bis 7, **dadurch gekennzeichnet, dass** zumindest das erste Kunststoffmaterial (30) des Rührkopfes (12), insbesondere sowohl das erste Kunststoffmaterial (30) als auch das zweite Kunststoffmaterial (31a) der Außenbeschichtung (23) und/oder das dritte Kunststoffmaterial (31b) der Bodenbeschichtung (24), von Polyurethanen, insbesondere auf der Basis von Polyestern, gebildet ist/sind.

9. Verteilmaschine nach einem der Ansprüche 1 bis 8, **dadurch gekennzeichnet, dass** der wenigstens eine Rührfinger (4) aus Metall gefertigt ist.

10. Verteilmaschine nach einem der Ansprüche 1 bis 9, **dadurch gekennzeichnet, dass** der Innenquerschnitt der Aufnahme (16) im Wesentlichen komplementär zu dem Außenquerschnitt des Rührfingers (4) ausgestaltet ist.

11. Verteilmaschine nach einem der Ansprüche 1 bis 10, **dadurch gekennzeichnet, dass** der wenigstens eine Rührfinger (4) mittels wenigstens einer sich im Wesentlichen senkrecht zu der Aufnahme (16) erstreckenden Schraube (17) fixiert ist, wobei die Schraube (17) im montierten Zustand des Rührfingers (4) insbesondere eine Durchgangsbohrung (18) desselben durchsetzt.

12. Verteilmaschine nach Anspruch 11, **dadurch gekennzeichnet, dass** die Schraube (17) zwischen der dem Behälterinnern zugewandten, freien Stirnseite des Rührkopfes (12) und einer Schulter (18a) einer sich in Axialrichtung erstreckenden Innenbohrung (13) des Rührkopfes (12), welche die Rührwerkswelle (5) aufnimmt, wirksam ist.

13. Verteilmaschine einem der Ansprüche 1 bis 12, **dadurch gekennzeichnet, dass** die dem Behälterinnern zugewandte, freie Stirnseite des Rührkopfes (12) zumindest in ihrem zentralen Bereich mit einer Platte (21), insbesondere aus Metall, abgedeckt ist, wobei die Platte (21) insbesondere in einer oberflächigen Vertiefung (22) des Rührkopfes (12) aufgenommen ist.

14. Verteilmaschine nach einem der Ansprüche 1 bis 13, **dadurch gekennzeichnet, dass** der Rührkopf (12), insbesondere mittels eines Bajonettverschlusses (14), lösbar an der Rührwerkswelle (5) festgelegt ist.

15. Verteilmaschine nach einem der Ansprüche 1 bis 14, **dadurch gekennzeichnet, dass** es sich bei der Rührwerkswelle (5) um den endständigen Abschnitt einer die in Form von Verteilerscheiben (9) ausgebildeten Verteilorgane tragenden Welle handelt.

## Claims

1. Distribution machine, in particular agricultural spreader or winter grit spreader, with at least one container (1) for holding grit, at least one outlet opening (2) which is arranged at the bottom of the container (1) and has a metering member (6) arranged downstream thereof, and with a distributing member which is arranged downstream of the respective metering member (6) and is intended for distributing the grit on the ground, wherein the container (1) is equipped with a stirrer (3) which comprises a stirrer shaft (5) which passes through the wall of the container (1), projects into the container (1) and to the free end of which a stirring head (12) is fastened, the stirring head sealing off the stirrer shaft (5) from the wall of the container (1) and being designed for carrying at least one stirring finger (4) configured as a separate part, wherein the stirring head (12) is manufactured from a first plastics material (30), wherein the stirring head (12) is provided
- on its outer side facing the container interior with an outer coating (23) consisting of a second plastics material (31a) having a greater abrasion resistance than the first plastics material (30) of the stirring head (12) and/or of a lesser hardness than the first plastics material (30) of the stirring head (12), and/or
- on its side which faces the container wall and with which said stirring head lies against the container wall, with a bottom coating (24) consisting of a third plastics material (31b) having a greater abrasion resistance than the first plastics material (30) of the stirring head (12) and/or of a lesser hardness than the first plastics material (30) of the stirring head (12),
**characterized in that** the at least one stirring finger (4) is fixed in a receptacle (16) which extends substantially in the radial direction of the stirring head (12) and is closed around the full circumference.

2. Distribution machine according to Claim 1, **characterized in that** the second plastics material (31a) of the outer coating (23) and the third plastics material (31b) of the bottom coating (24) of the stirring head (12) are identical, wherein in particular the bottom coating (24) of the stirring head (12) merges seamlessly into the outer coating (23) thereof.

3. Distribution machine according to Claim 1 or 2, **characterized in that** the first plastics material (30) of the stirring head (12) has
- a greater tensile strength and/or
- a greater breaking strength and/or
- a greater tearing strength and/or
- a higher modulus of elasticity
than the second plastics material (31a) of the outer coating (23) and/or than the third plastics material (31b) of the bottom coating (24).

4. Distribution machine according to one of Claims 1 to 3, **characterized in that** the first plastics material (30) of the stirring head (12) has
- a hardness of at least 40 Shore-D, in particular of at least 50 Shore-D, preferably of at least 60 Shore-D, determined according to DIN 53505; and/or
- a tensile strength of at least 10 N/mm², in particular of at least 15 N/mm², preferably of at least 20 N/mm², at a 50% elongation, determined according to DIN 53504; and/or
- a breaking strength of at least 50 N/mm², in particular of at least 60 N/mm², preferably of at least 70 N/mm², determined according to DIN 53504; and/or
- a tearing strength of at least 100 N/mm, in particular of at least 150 N/mm, preferably of at least 200 N/mm, determined according to DIN 53515.

5. Distribution machine according to one of Claims 1 to 4, **characterized in that** the second material (31a) of the outer coating (23) and/or the third material (31b) of the bottom coating (24) has
- an abrasion loss of at most 50 mm³, in particular of at most 45 mm³, preferably of at most 40 mm³, determined according to DIN 53516; and/or
- a hardness of at most 100 Shore-A, in particular of at most 95 Shore-A, preferably of at most 90 Shore-A, determined according to DIN 53505.

6. Distribution machine according to one of Claims 1 to 5, **characterized in that** at least the first plastics material (30) of the stirring head (12), in particular both the first plastics material (30) and also the second plastics material (31a) of the outer coating (23) and/or the third plastics material (31b) of the bottom coating (24) is/are formed by a thermoplastics material.

7. Distribution machine according to Claim 6, **characterized in that** the stirring head (12) is formed by an injection moulded part, in particular by a multicomponent injection moulded part.

8. Distribution machine according to one of Claims 1 to 7, **characterized in that** at least the first plastics material (30) of the stirring head (12), in particular both the first plastics material (30) and the second plastics material (31a) of the outer coating (23) and/or the third plastics material (31b) of the bottom coating (24) is/are formed by polyurethanes, in particular on the basis of polyesters.

9. Distribution machine according to one of Claims 1 to 8, **characterized in that** the at least one stirring finger (4) is manufactured from metal.

10. Distribution machine according to one of Claims 1 to 9, **characterized in that** the inner cross section of the receptacle (16) is configured in a substantially complementary manner with respect to the outer cross section of the stirring finger (4).

11. Distribution machine according to one of Claims 1 to 10, **characterized in that** the at least one stirring finger (4) is secured by means of at least one screw (17) extending substantially perpendicularly to the receptacle (16), wherein, in the mounted state of the stirring finger (4), the screw (17) in particular passes through a passage hole (18) in same.

12. Distribution machine according to Claim 11, **characterized in that** the screw (17) is effective between the free end side, facing the container interior, of the stirring head (12) and a shoulder (18a) of an inner bore (13) of the stirring head (12), the inner bore extending in the axial direction and receiving the stirrer shaft (5).

13. Distribution machine according to one of Claims 1 to 12, **characterized in that** the free end side of the stirring head (12), which end side faces the container interior, is covered at least in its central region with a plate (21), in particular made of metal, wherein the plate (21) is accommodated in particular in a surface depression (22) of the stirring head (12).

14. Distribution machine according to one of Claims 1 to 13, **characterized in that** the stirring head (12) is fixed releaseably to the stirrer shaft (5) in particular by means of a bayonet catch (14).

15. Distribution machine according to one of Claims 1 to 14, **characterized in that** the stirrer shaft (5) is the final portion of a shaft carrying the distribution members which are designed in the form of distributor discs (9).

## Revendications

1. Épandeur, notamment machine d'épandage agricole ou machine d'épandage d'hiver, avec au moins une cuve (1) destinée à recevoir un produit d'épandage, au moins une ouverture d'évacuation (2) disposée au niveau du fond de la cuve (1) avec un organe de dosage (6) placé en aval de celle-ci et avec un organe de distribution placé en aval de l'organe de dosage (6) respectif pour disperser le produit d'épandage sur le sol, la cuve (1) étant équipée d'un agitateur (3) comprenant un arbre d'agitateur (5) traversant la paroi de la cuve (1) et rentrant dans la cuve (1) au niveau de l'extrémité libre de laquelle une tête d'agitation (12) est fixée, cette tête étanchéifiant l'arbre d'agitateur (5) contre la paroi de la cuve (1) et étant réalisée pour supporter au moins un doigt d'agitation (4) configuré sous la forme d'une partie séparée, la tête d'agitation (12) étant fabriquée à partir d'une première matière plastique (30), la tête d'agitation (12) étant pourvue :
- au niveau de son côté extérieur orienté vers l'intérieur de la cuve, d'un revêtement extérieur (23) fabriqué à partir d'une deuxième matière plastique (31a) avec une résistance à l'abrasion supérieure à celle de la première matière plastique (30) de la tête d'agitation (12) et/ou avec une dureté inférieure à celle de la première matière plastique (30) de la tête d'agitation (12) ; et/ou
- au niveau de son côté orienté vers la paroi de cuve avec lequel il repose contre la paroi de cuve, d'un revêtement de fond (24) réalisé à partir d'une troisième matière plastique (31 b) avec une résistance à l'abrasion supérieure à celle de la première matière plastique (30) de la tête d'agitation (12) et/ou avec une dureté inférieure à celle de la première matière plastique (30) de la tête d'agitation (12) ;
**caractérisé en ce que** l'au moins un doigt d'agitation (4) est fixé dans un logement (16) s'étendant pour l'essentiel dans la direction radiale de la tête d'agitation (12) et est entièrement fermé.

2. Épandeur selon la revendication 1, **caractérisé en ce que** la deuxième matière plastique (31a) du revêtement extérieur (23) et la troisième matière plastique (31 b) du revêtement de fond (24) de la tête d'agitation (12) sont identiques, le revêtement de fond (24) de la tête d'agitation (12) se transformant notamment sans couture en son revêtement extérieur (23).

3. Épandeur selon la revendication 1 ou 2, **caractérisé en ce que** la première matière plastique (30) de la tête d'agitation (12) présente :
- une résistance à la traction supérieure ; et/ou
- une résistance à la rupture supérieure ; et/ou
- une résistance à la déchirure supérieure ; et/ou
- un module d'élasticité supérieur ;
à ceux de la deuxième matière plastique (31a) du revêtement extérieur (23) et/ou à ceux de la troisième matière plastique (31 b) du revêtement de fond (24).

4. Épandeur selon l'une quelconque des revendications 1 à 3, **caractérisé en ce que** la première matière plastique (30) de la tête d'agitation (12) présente :
- une dureté d'au moins 40 Shore D, notamment d'au moins 50 Shore D, de préférence d'au moins 60 Shore D, déterminée selon DIN 53505 ; et/ou
- une résistance à la traction d'au moins 10 N/mm², notamment d'au moins 15 N/mm², de préférence d'au moins 20 N/mm², pour 50 % de dilatation, calculée selon DIN 53504 ; et/ou
- une résistance à la rupture d'au moins 50 N/mm², notamment d'au moins 60 N/mm², de préférence d'au moins 70 N/mm², déterminée selon DIN 53504 ; et/ou
- une résistance à la déchirure d'au moins 100 N/mm, notamment d'au moins 150 N/mm, de préférence d'au moins 200 N/mm, déterminée selon DIN 53515.

5. Épandeur selon l'une quelconque des revendications 1 à 4, **caractérisé en ce que** la deuxième matière (31a) du revêtement extérieur (23) et/ou la troisième matière (31 b) du revêtement de fond (24) présente :
- une perte d'abrasion de tout au plus 50 mm³, notamment de tout au plus 45 mm³, de préférence de tout au plus 40 mm³, déterminée selon DIN 53516 ; et/ou
- une dureté de tout au plus 100 Shore A, notamment de tout au plus 95 Shore A, de préférence de tout au plus 90 Shore A, déterminée selon DIN 53505.

6. Épandeur selon l'une quelconque des revendications 1 à 5, **caractérisé en ce qu'**au moins la première matière plastique (30) de la tête d'agitation (12), notamment tant la première matière plastique (30) que la deuxième matière plastique (31a) du revêtement extérieur (23) et/ou la troisième matière plastique (31b) du revêtement de fond (24) est formée/sont formées à partir d'une matière plastique thermoplastique.

7. Épandeur selon la revendication 6, **caractérisé en ce que** la tête d'agitation (12) est formée d'une pièce moulée par injection, notamment d'une pièce moulée par injection multicomposants.

8. Épandeur selon l'une quelconque des revendications 1 à 7, **caractérisé en ce qu'**au moins la première matière plastique (30) de la tête d'agitation (12), notamment tant la première matière plastique (30) que la deuxième matière plastique (31a) du revêtement extérieur (23) et/ou la troisième matière plastique (31b) du revêtement de fond (24) est formée/sont formées à partir de polyuréthanes, notamment à base de polyesters.

9. Épandeur selon l'une quelconque des revendications 1 à 8, **caractérisé en ce que** l'au moins un doigt d'agitation (4) est fabriqué en métal.

10. Épandeur selon l'une quelconque des revendications 1 à 9, **caractérisé en ce que** la section transversale intérieure du logement (16) est configurée pour l'essentiel de façon complémentaire à la section transversale extérieure du doigt d'agitation (4).

11. Épandeur selon l'une quelconque des revendications 1 à 10, **caractérisé en ce que** l'au moins un doigt d'agitation (4) est fixé à l'aide d'au moins une vis (17) s'étendant pour l'essentiel perpendiculairement au logement (16), la vis (17) traversant à l'état monté le doigt d'agitation (4) notamment un alésage traversant (18) de celui-ci.

12. Épandeur selon la revendication 11, **caractérisé en ce que** la vis (17) est active entre le côté avant libre, orienté vers l'intérieur de la cuve, de la tête d'agitation (12) et un épaulement (18a) d'un alésage intérieur (13), s'étendant dans la direction axiale, de la tête d'agitation (12) logeant l'arbre d'agitateur (5).

13. Épandeur selon l'une quelconque des revendications 1 à 12, **caractérisé en ce que** le côté avant libre, orienté vers l'intérieur de la cuve, de la tête d'agitation (12) est recouvert, au moins dans sa région centrale, d'une plaque (21), notamment en métal, la plaque (21) étant notamment logée dans un renfoncement (22) superficiel de la tête d'agitation (12).

14. Épandeur selon l'une quelconque des revendications 1 à 13, **caractérisé en ce que** la tête d'agitation (12) est fixée, notamment à l'aide d'une fermeture à baïonnette (14), de façon amovible à l'arbre d'agitateur (5).

15. Épandeur selon l'une quelconque des revendications 1 à 14, **caractérisé en ce que** l'arbre d'agitateur (5) est une section d'extrémité d'un arbre supportant un organe de dispersion réalisé sous la forme de disques d'épandage (9).
